# EUROPEAN PATENT APPLICATION

(11) **EP 1 020 753 A1**
(43) Date of publication of application: **19.07.2000**
(21) Application number: 00830008.9
(22) Date of filing: 12.01.2000
(51) Int. Cl.: G02C 7/16, G02C 11/00

(54) **Sun visor especially for eyeglasses**

(30) Priority: 14.01.1999 IT BO990003 U
(71) Applicant: Angelini Design di Lamberto Angelini & C. S.a.s., 41056 Savignano sul Panaro (Modena) (IT)
(72) Inventor: Angelini, Lamberto, 40122 Bologna (IT)
(74) Representative: Pederzini, Paolo

(57) **Abstract**

A sun visor, in particular for eyeglasses, comprising a light intercepting element (2) and means (3) for connecting to the eyeglasses (4). The light intercepting element (2) is constituted by a n elongated strip, shaped and/or able to be shaped in such a way as to adapt itself to the eyeglasses worn and to the forehead of a user obtaining a covering of the slit between the eyeglasses and the forehead and creating a shadow zone over the eyes for further protection from the glare and glint of even diffused light.

## Description

The present invention relates to a sun visor in particular for eyeglasses.

It is well known that visor serve the purpose of creating a shadow to protect eyes in the presence of very intense sunlight, replacing the usual gesture of bring a hand in side contact with the forehead to prevent one's eyes from being hit by sunlight directly.

To serve this function of protecting from light, visors are known which are integrated in caps or, yet more specifically, sun visors exists which are worn around the temples.

Sunglasses also provide for eye protection against sunlight, but in most cases they do not adhere to the arch of the eyebrows, but constitute a "barrier" only to frontal light, leaving a slit between the frame and the user's face through which light can reach his or her eyes without any hindrance.

When engaging in or watching sporting activities that are performed outdoors, such as golf, cycling, jogging, horseback riding, yachting, etc., or driving roofless vehicles or simply when walking in sunlight, it is very frequent for eyes to be hit by sunrays directly, even if sunglasses are worn.

Especially in the aforementioned situations, thus, the need is felt for total protection of the eyes against sun light.

The aim of the present invention is therefore that of eliminating the aforementioned drawbacks by means of a visor that prevents light from reaching the user's eyes directly.

A further aim of the present invention is to create a shadow zone over the eyes for additional protection against the glare and glint of even diffused light.

These aims and others beside which shall become more readily apparent in the description that follows are achieved, according to the invention, by the a sun visor, in particular for eyeglasses, comprising at least an element for intercepting the light, and means for connecting to the eyeglasses, associated to said light intercepting element, characterised in that said light intercepting element has flattened shape and said connecting means are positioned, relative to the light intercepting element, in such a way as to bring a side of the light intercepting element itself in contact with the forehead of a user when the light intercepting element is mounted on the eyeglasses, to close the slit that is created between the eyeglasses and the forehead of the user who wears them.

Further technical features and the advantages of the invention shall become more readily apparent in the detailed description that follows, made with reference to the accompanying drawings, which show an embodiment provided purely by way of non limiting example, in which:
- Figure 1 shows a first embodiment of the visor according to the present invention, in a perspective schematic view;
- Figure 2 shows the embodiment of Figure 1 in perspective view with some parts removed the better to highlight other parts;
- Figure 3 shows an example of application of the visor to a pair of eyeglasses, in perspective view;
- Figure 4 shows an alternative embodiment of the visor according to the present invention, in perspective view with some parts removed the better to highlight other parts;
- Figure 5 shows a further embodiment of the visor, in perspective view with some parts removed the better to highlight other parts;
- Figure 6 shows an alternative embodiment of the solution of Figure 5, in a front section view;
- Figure 7 shows a detail of the embodiment of Figure 6 in a top view;
- Figure 8 shows a detail of the visor according to the present invention in a front schematic view;
- Figure 9 shows a further embodiment of the visor, in rear view;
- Figure 10 shows an alternative embodiment of the visor, in perspective view;
- Figures 11, 12 and 13 show alternative embodiments of the connecting means of the visor according to the present invention, in perspective view;
- Figures 14 and 15 shows an alternative embodiment of the visor and of application of the visor to the eyeglasses, in perspective view;
- Figure 16 shows the visor of Figure 15 applied to the eyeglasses in side view;
- Figure 17 shows the light intercepting element of the visor of Figure 15 applied to the eyeglasses, in side view;
- Figure 18 shows an alternative embodiment of the visor of Figure 12, in perspective view;
- Figure 19 shows the light intercepting element of the visor of Figure 18 applied to the eyeglasses, in side view;
- Figures 20 and 21 show further embodiments of the visor, in perspective view.

According to the figures of the accompanying drawings, the reference 1 indicates the sun visor constituting the subject of the present invention.

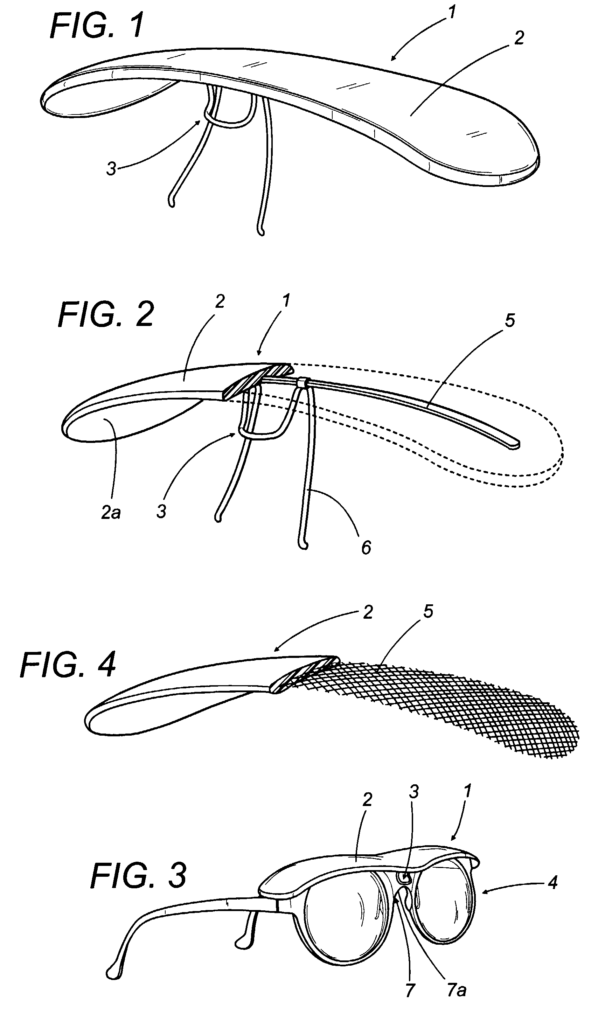

As shown in Figures 1 and 3, the visor 1 comprises a light intercepting element or flap 2 and means 3 for connecting the visor 1 and a pair of eyeglasses 4.

According to a preferred embodiment, the flap 2 presents a flattened shape, for instance an elongated strip configuration, and it is made of a material suitable to protect the eyes against direct sun light or against its glint.

Originally, the connecting means 3 are positioned, relative to the flap 2, in such a way as to bring a side of the flap 2 in contact with the forehead of a user when the visor 1 is mounted onto the eyeglasses 4 so as to constitute a cover of the slit that is formed between the eyeglasses 4 and the forehead of a user, to prevent the passage of direct light and to create a shadow zone over the user's eyes for further protection against the glare and glint of even diffused light.

Advantageously, the flap 2 is formed with a mouldable structure, to adapt the visor to the geometry of any kind of eyeglasses.

In the embodiment of Figure 2, the visor 1 comprises a support 5 in the form of a strip extending in the longitudinal direction of the flap 2 and associated to the lower face 2a of the flap itself 2. The support 5, mouldable, allows to adapt the profile of the flap 2 to the geometry of the glasses 4.

The connecting means 3 are constituted by a clip 6 able to be inserted on a bridge 7 of the eyeglasses 4. The spring 6 is constituted by an elastically yielding wire, for instance metallic, folded back, so that the clip can be fastened unto and unfastened from glasses of any shape, material and thickness.

The clip 6 is connected to the support 5 in such a way as to guarantee the correct and stable positioning of the flap 2 of the visor 1, when the clip 6 is latched onto the bridge 7 of the eyeglasses 4, as shown in Figure 3.

In the embodiment of Figure 4, the support 5 comprises a deformable network structure, which is integrated into the flap 2 during the moulding phase.

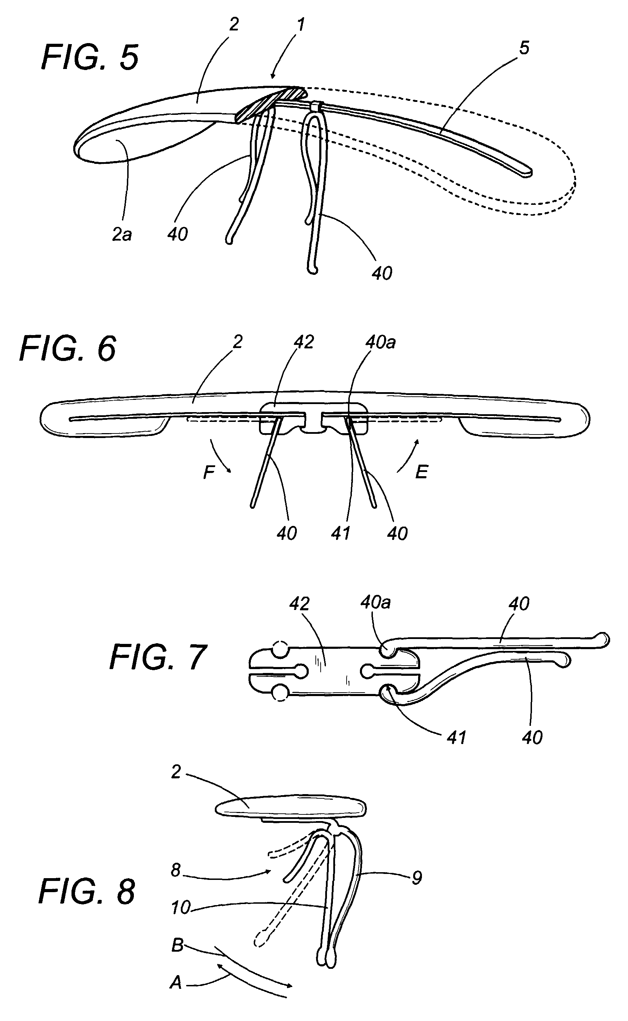

As Figure 5 shows, the connecting means 3 can comprise a pair of clips 40 made of elastically yielding material, associated to the support 5, both made in the form of a strip and made as a network structure.

The clips 40 are positioned symmetrically relative to the bridge 7 of the eyeglasses 4 whereto the visor 1 is to be applied, in such a way that the lateral portions of the bridge 7 can be latched in contact with the lenses to guarantee the positioning stability of the visor itself.

Advantageously, as shown in Figures 6 and 7, each clip 40 presents a portion 40a able to rotate in a seat 41 of a base 42 integral with the support 5, in such a way as to move alternatively from a first stable position substantially perpendicular to the flap 2, to accomplish the latching to the eyeglasses, and a second stable position substantially parallel to the flap 2 itself (shown with dashed line in Figure 6), when the visor is not in use.

In case of employment of the visor, each clip 40 is rotated in the direction F until it reaches a first locking position inside the seat 41 which allows its stable positioning and the subsequent latching to the eyeglasses 4.

The portion 40a can rotate inside the seat 41 according to the direction E, in such a way as to move to a second locking position parallel to the longitudinal direction of extension of the flap 2 and thus reduce the size of the visor 1 when it is not in use.

As Figure 8 shows, the connecting means 3 can comprise a clip 8 presenting a first portion 9, with curved profile, rigidly connected to the support 5, and a second portion 10, connected to the first portion 9 with elastically yielding coupling. The portion 10 can thus be rotated in the direction indicated by the arrow A to allow the insertion of the bridge 7a of the eyeglasses 4 between the portion 10 itself and the portion 9 and in the opposite direction B to allow the latching.

The clip 8 can be situated in a central position of the flap 2, in such a way as to be able to latch onto the bridge 7a, or two clips may be provided, positioned symmetrically relative to the bridge 7 so as to latch the lateral parts of the bridge 7 itself in correspondence with the lenses of the eyeglasses 4.

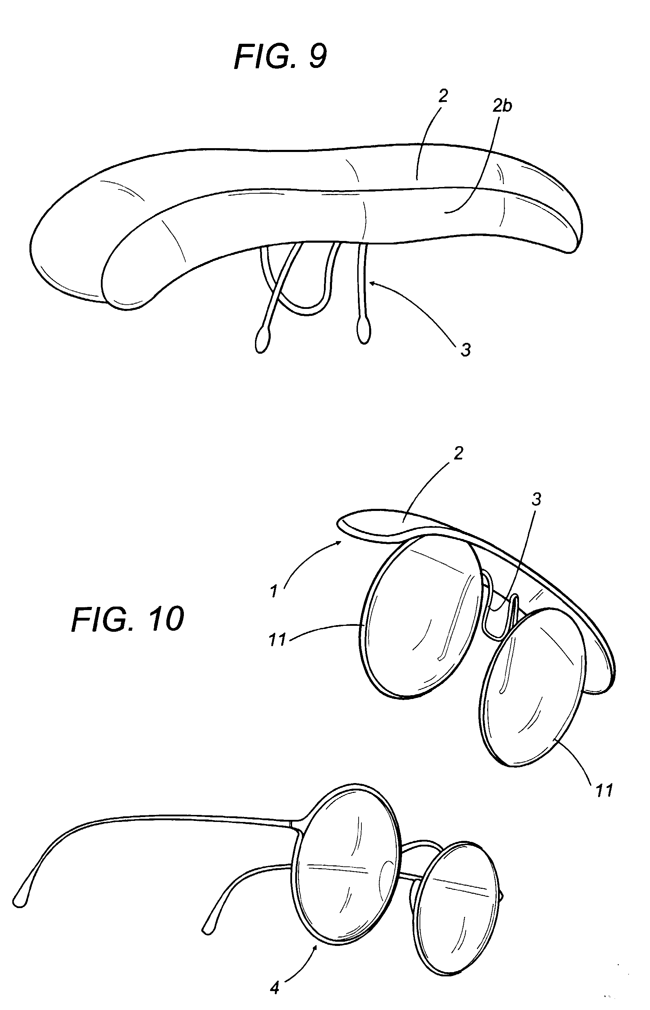

In an alternative embodiment of the visor 1, shown in Figure 9, the flap 2 presents a rear lateral portion 2b, which is placed in contact with the user's face, made of soft material to guarantee a better adherence with the forehead.

In Figure 10, the visor 1 comprises a pair of coloured lenses 11 serving the function of protecting against sunlight. The lenses 11 are positioned relative to the connecting means 3 in such a way that, when the visor is mounted onto the eyeglasses 4, the lenses face those of the eyeglasses 4. In this way, the visor can be associated to a pair of prescription eyeglasses, replacing and integrating the function of sunglasses.

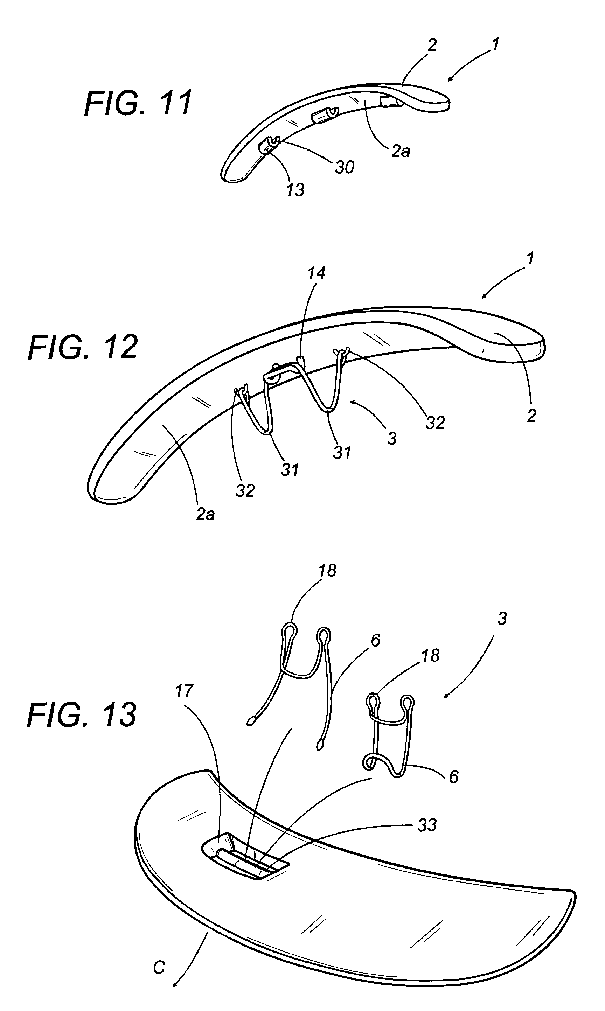

In the embodiment shown in Figure 11, the connecting means comprises projections 13, made of flexible material, which protrude from the lower surface of the flap 2.

The projections 13 are provided with notches which define coupling seats 30, into which corresponding portions of the eyeglasses 4 can be inserted.

The projections 13 can be associated to the flap 2 or made in a single piece with the flap 2 itself, exploiting, in this case, the flexibility of the constructive material of the visor itself appropriately shaped to achieve the mechanical coupling between visor and eyeglasses.

In the embodiment of Figure 12, the connecting means 3 are constituted by a segment of elastic wire 31 having the two extremities connected to the flap 2, for example by means of two rings 32 associated to the lower surface 2a of the flap 2.

The segment of elastic wire 31 is connected to the bridge 7 of the glasses 4 so as to envelop it at least partially, and is subsequently connected to a latch 14, positioned inferiorly and in the intermediate part of the flap 2 itself, to guarantee the stable positioning of the visor.

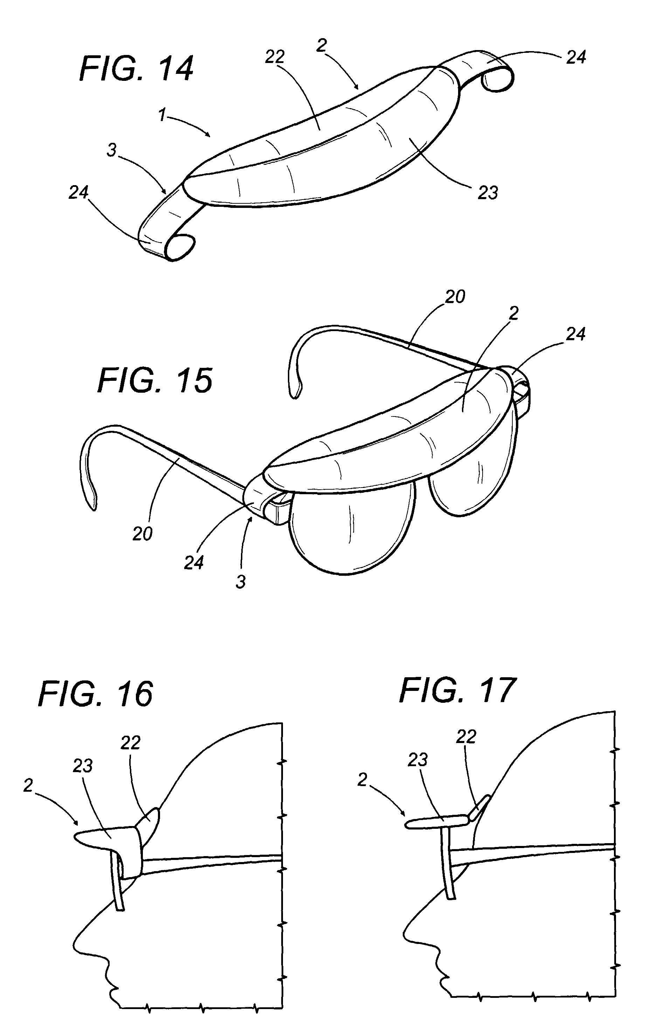

In the embodiment of Figure 13, the flap 2 presents, in its intermediate part, a support strip 33, and a slot 17, which leaves uncovered a segment of the strip 33, for the insertion of interchangeable connecting means 3, able to be latched to the aforesaid strip 33. The support strip 33 can be associated to the flap 2 or it can be constituted by a portion of the support 5.

The interchangeable connecting means 3 are constituted by a clip 6, able to be latched onto a bridge 7 of the glasses, constituted by a folded back elastically yielding wire which presents seats 18 for latching to the strip 33 itself and is shaped to adapt itself to different types of eyeglasses. The clip 6 is introduced through the slot 17 in the direction of the arrow C so that the strip 33 is inserted into the latching seats 18.

In this way the clip 6 can be replaced depending on the type of glasses onto which the visor is applied, achieving an interchangeable type of connection to adapt the visor to different types and models of eyeglasses.

In the embodiment shown in Figures 14 through 17, the visor 1 is constituted by a single element comprising the flap 2 and connecting means 3 in a single piece and made of soft and flexible material. The flap 2 presents a shaped profile having a first inclined portion 22 which adapts itself to the user's forehead and a substantially planar second portion 23 which guarantees protection against sunlight (Figure 17).

The connecting means are constituted by a pair of bands 24, bilateral relative to the flap 2 and structured in such a way as to envelop at least partially a portion of each of the arms 20 which are part of the frame of the eyeglasses 4. The mechanical latching of the bands 24 onto the arms 20 can be achieved, for instance, through the application of a slot or of a button or of Velcro on the lateral bands 24 themselves, or by inserting into the bands 24 a harmonic steel wire which tends to fold back onto itself enveloping the arms 20 automatically.

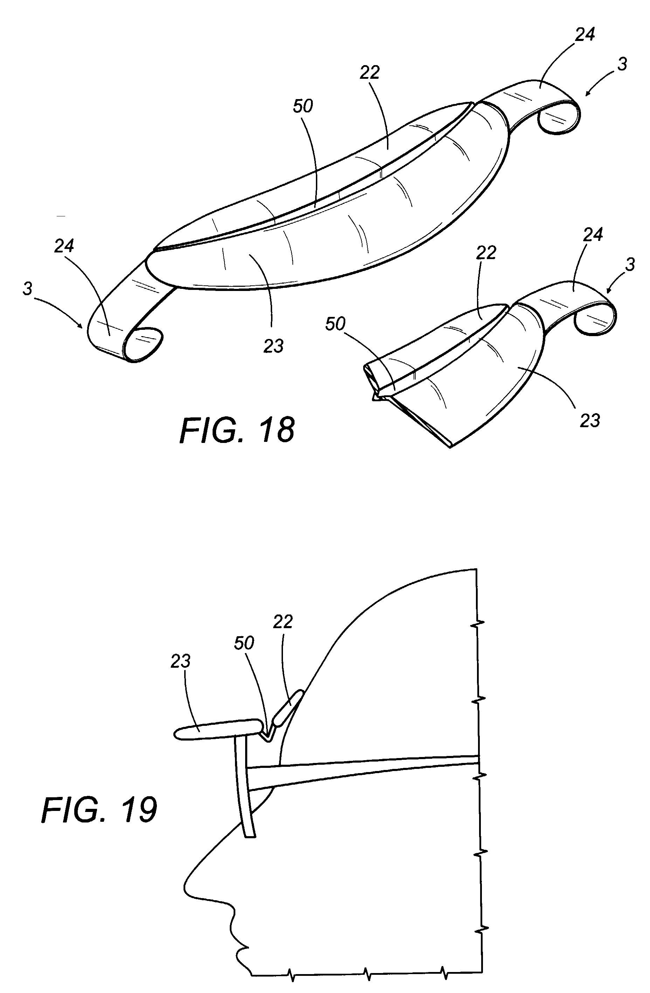

As shown in Figures 18 and 19, the first inclined portion 22 and the second substantially planar portion 23 can be mutually connected by means of a hinge element 50 obtained in a single piece therewith, for instance a groove, so as to allow the co-planar positioning of the two portions and thus reduce the size of the visor when it is not in use.

In this embodiment, the sun visor constitutes an accessory for eyeglasses, completely lacking a support structure and rigid elements to achieve the latching with the eyeglasses themselves.

The manufacture of the visor in this case provides for injection moulding a single element or heat-forming a dual layer constituted by soft PVC at the exterior, coupled with a thin layer of foam rubber at the interior.

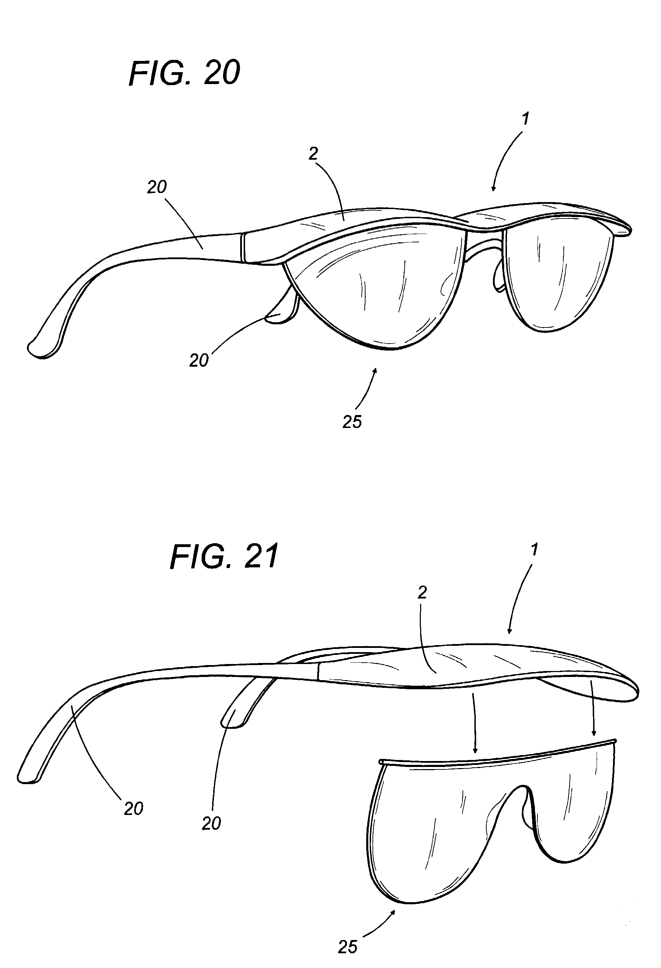

In a further embodiment, shown in Figure 20, the visor comprises a pair of arms 20, bilaterally connected to the flap 2, and the frontal part 25 of a frame for eyeglasses, inferiorly integrated with the flap 2 itself The visor therefore is not an accessory of the eyeglasses, but is totally integrated in the original design of the frame of the eyeglasses themselves.

In the example of Figure 21, the visor 1 comprises a pair of arms 20 connected bilaterally to the flap 2, in such a way that the visor can be worn autonomously, and connecting means 3, situated in the lower part of the flap 2, suitable to receive a single eyeglass lens 21 forming, in a single body, both the eyepieces and the bridge of the eyeglasses themselves.

The sun visor according to the present invention defines a sort of "eyelid" shaped according to a suitable profile which covers the slit between the eyeglasses and the user's forehead, thus allowing to obtain a protection against sunlight extended to the surfaces lying between the eyeglasses and the face.

Moreover the visor, used as an accessory of eyeglasses, comprises a coupling system able to adapt to any type of frame and is shaped in such a way as to suit itself to the shape of the eyeglasses and to the user's anatomical conformation, also thanks to the deformability of its support structure and/or to the flexibility of the material whereof it is made.

The coupling between visor and eyeglasses can be achieved with different systems, whilst still preserving the characteristics of universal attachment, i.e. adaptable to any kind eyeglasses, and detachable attachment, so as to make the visor an accessory of the eyeglasses.

Moreover, the flexibility of the material whereof the visor is made, coupled with the deformability of the support incorporated in the flap itself or integral therewith, allows to adapt the visor to the different shape of any type of eyeglasses.

The manufacture of the flap, or at least of a portion thereof, with particularly soft material further allows to adapt the visor to the morphology of the user's face and to make the flap itself optimally adhere to the forehead in the contact zone.

The employment of an elastic or yieldingly elastic material to manufacture the means for connecting the flap to the eyeglasses allows to latch the visor onto any kind of eyeglasses and to apply it to any type of frame.

Moreover, the fact of providing possible different interchangeable versions of the connecting means between flap and eyeglasses allows to adapt the visor to different types and models of eyeglasses.

The invention thus conceived can be subject to numerous modifications and variations, without thereby departing from the scope of the inventive concept. Moreover, all details can be replaced by technically equivalent elements.

## Claims

1. A sun visor, in particular for eyeglasses, comprising at least an element (2) for intercepting light, and means (3) for connecting to the glasses (4), associated to said light intercepting element (2), characterised in that said light intercepting element (2) has flattened shape and said connecting means (3) are positioned, relative to the light intercepting element (2), in such a way as to bring a side of the light intercepting element (2) itself in contact with the forehead of a user when the light intercepting element (2) is mounted on the eyeglasses (4) to close the slit that is created between the eyeglasses (4) and the forehead of the user who wears them.

2. A visor as claimed in claim 1, characterised in that the light intercepting element (2) is formed with a mouldable structure to adapt the visor obtained thereby to the geometry of the eyeglasses (4).

3. A visor as claimed in claim 1, characterised in that the light intercepting element (2) is made of flexible material and comprises a support (5), extending in the longitudinal direction of the light intercepting element (2) itself, said support (5) presents a mouldable structure to adapt the visor to the geometry of the eyeglasses (4).

4. A visor as claimed in claim 3, characterised in that said support is in the shape of a strip associated to the lower face of the light intercepting element (2).

5. A visor as claimed in claim 3, characterised in that said support is constituted by a network structure inserted inside the light intercepting element (2).

6. A visor as claimed in claims 1, 2 or 3, characterised in that said connecting means (3) are connected to the light intercepting element (2) and comprise at least a clip (6) able to be inserted on a bridge (7) of the eyeglasses (4), said clip (6) being constituted by an elastically yielding wire folded back in such a way as to able to be fastened onto and unfastened from different types of eyeglasses.

7. A visor as claimed in claims 1, 2 or 3, characterised in that said connecting means (3) comprise at least a clip (8) presenting a first portion (9), rigidly connected to said light intercepting element (2), and a second portion (10) connected to said first portion (9) with elastically yielding coupling.

8. A visor as claimed in claims 1, 2 or 3, characterised in that said light intercepting element (2) presents inferiorly and in its intermediate part a latch (14), and in that said connecting means (3) are constituted by a segment of elastic wire (31), having the ends associated to the light intercepting element (2), said segment (31) being connected to said latch (14) only after having enveloped at least partially the bridge (7) of the eyeglasses (4).

9. A visor as claimed in claims 1, 2 or 3, characterised in that said connecting means (3) comprise at least a pair of bands (24), bilateral relative to said light intercepting element (2), so structured as to envelop at least partially a portion of the arms (20) which are comprised in the frame of the eyeglasses (4).

10. A visor as claimed in claims 1, 2 or 3, characterised in that said light intercepting element (2) presents in its intermediate part a support strip (33) and a slot (17), which leaves uncovered a segment of said strip (33), for the insertion of interchangeable connecting means (3) able to be latched onto said strip (33), and in that said connecting means comprise a clip (6) able to be latched onto a bridge (7) of the eyeglasses (4), said clip (6) being constituted by a folded back elastically yielding wire presenting seats (18) for latching onto said support strip (33) and shaped to adapt itself to different types of eyeglasses.

11. A visor as claimed in claims 1, 2 or 3, characterised in that said connecting means (3) comprise projections (13) which protrude from the inferior surface (2a) of said light intercepting element (2), said projections (13) being provided with notches which define seats (30) within which corresponding portions of the eyeglasses can be inserted, whereto the visor is applied.

12. A visor as claimed in claims 1, 2 or 3, characterised in that the light intercepting element (2) comprises a pair of lenses (11) for protection against light, positioned relative to the connecting means (3) in such a way that, when the visor is mounted on the glasses, the lenses (11) face those of the eyeglasses themselves.

13. A visor as claimed in claims 1, 2 or 3, characterised in that said light intercepting element (2) and said connecting means (3) are made in a single piece with elastomeric material to obtain a non-rigid structure for latching onto the eyeglasses.

14. A visor as claimed in claim 13, characterised in that said connecting means (3) comprise projections (13) which protrude from the inferior surface (2a) of said light intercepting element (2), said projections (13) being provided with notches which define seats (30) within which corresponding portions of the eyeglasses can be inserted, whereto the visor is applied.

15. A visor as claimed in claim 13, characterised in that said connecting means (3) comprise at least a pair of bands (24), bilateral relative to said light intercepting element (2), so structured as to envelop at least partially a portion of the arms (20) which are comprised in the frame of the eyeglasses (4).

16. A visor as claimed in claims 1, 2 or 3, characterised in that said light intercepting element (2) comprises, in correspondence with the rear lateral surface, at least a portion (2b) made of soft material to guarantee a better adherence with the user's forehead.

17. A visor as claimed in claims 1, 2 or 3, characterised in that said light intercepting element (2) presents a contoured profile having a first portion (22) so inclined as to adapt itself to the user's forehead and a second substantially planar portion (23) to bear onto the upper part of the eyeglasses.

18. A visor as claimed in claim 13, characterised in that said light intercepting element (2) comprises, in correspondence wit the rear lateral surface, at least a portion (2b) made of soft material to guarantee a better adherence with the user's forehead.

19. A visor as claimed in claim 13, characterised in that said light intercepting element (2) presents a contoured profile having a first portion (22) so inclined as to adapt itself to the user's forehead and a second substantially planar portion (23) to bear onto the upper part of the eyeglasses.

20. A sun visor, comprising at least a light intercepting element (2), characterised in that it comprises a pair of arms (20) bilaterally connected to the light intercepting element (2) in such a way that the visor (1) can be worn autonomously, and it presents, inferiorly integrated with the light intercepting element (2), the frontal part (25) of a frame for eyeglasses.

21. A sun visor, comprising at least a light intercepting element (2), characterised in that it comprises a pair of arms (20) bilaterally connected to the light intercepting element in such a way that the visor (1) can be worn autonomously, and it presents in its inferior part connecting means (3) suitable to receive a single eyeglass lens (21) forming, in a single piece, both the eyepieces and the bridge of the eyeglasses themselves.

22. A visor as claimed in claims 1, 2 or 3, characterised in that said connecting means (3) comprise a pair of clips (40), able to be inserted on the lateral portions of a bridge (7) of the eyeglasses (4) in correspondence with the lenses, in such a way as to be able to be fastened unto and unfastened from different types of eyeglasses.

23. A visor as claimed in claim 22, characterised in that it comprises a base (42), associated to the support (5) and provided with a pair of lateral seats (41), in each seat (41) being able to rotate a portion (40a) of the clip (40), in such a way as to move alternatively from a first stable position substantially perpendicular to the light intercepting element (2), to achieve latching onto the eyeglasses, and a second stable position substantially parallel to the light intercepting element (2), when the visor is not in use.

24. A visor as claimed in claim 17, characterised in that said first inclined portion (22) and said second substantially planar portion (23) are mutually connected by means of a hinge element (50) obtained in a single piece therewith, in such a way as to allow the co-planar positioning of said first portion (22) relative to said second portion (23) when the visor is not in use.

25. A visor as claimed in claim 19, characterised in that said first inclined portion (22) and said second substantially planar portion (23) are mutually connected by means of a hinge element (50) obtained in a single piece therewith, in such a way as to allow the co-planar positioning of said first portion (22) relative to said second portion (23) when the visor is not in use.
